Europäisches Patentamt

European Patent Office

Office européen des brevets

(19)

(11) Numéro de publication: **0 104 123**

**A1**

(12)

# DEMANDE DE BREVET EUROPEEN

(21) Numéro de dépôt: 83420141.0

(22) Date de dépôt: 12.08.83

(51) Int. Cl.³: **B 41 C 1/04**
**B 44 C 1/22**

(30) Priorité: 24.08.82 FR 8214968

(43) Date de publication de la demande:
28.03.84 Bulletin 84/13

(84) Etats contractants désignés:
AT BE CH DE GB IT LI LU NL SE

(71) Demandeur: DELTA PRODUCTIQUE Société anonyme
31 avenue de Verdun
F-26000 Valence(FR)

(72) Inventeur: Romand, Paul
La Batie Besayes
F-26000 Bourg de Peage(FR)

(72) Inventeur: Richalet, Jacques
3 Allée des Nourrets
F-78430 Louveciennes(FR)

(72) Inventeur: Guye, Olivier
22 rue Clisson (App. 443)
F-75646 Paris Cedex 13(FR)

(74) Mandataire: Buttet, Roger et al,
"Cabinet Charras" 3, Place de l'Hôtel-de-Ville
F-42000 Saint-Etienne(FR)

(54) Procédé de gravure digitale, le dispositif de mise en oeuvre et les produits obtenus.

(57) Un moyen (1) de prises de vues, combiné avec un moyen informatique (2) de traitement numérique de l'image, avec un moyen informatique (8) programmable (3) de code de la machine à graver, et avec une machine à graver.

./...

EP 0 104 123 A1

FIG·1

- 1 -

<u>Procédé</u> <u>de gravure digitale, le dispositif de mise en oeuvre</u>
<u>et les produits obtenus.</u>

L'objet de l'invention se rattache notamment au secteur technique de la gravure.

On connaît différents moyens pour obtenir la gravure d'un objet quelconque. Généralement, les divers procédés employés ne permettent pas d'obtenir des images qui ont réellement du relief avec des effets de contrastes. De même, il est difficile d'effectuer des retouches sur l'objet gravé.

Selon l'invention, on a voulu réaliser un dispositif permettant la gravure d'une image obtenue par une prise de vue directe ou à partir d'un cliché, de l'objet à graver, sur des matériaux et supports de nature et de forme diverses.

Dans ce but, le dispositif comprend pour l'essentiel, un moyen de prise de vues, un moyen informatique de traitement numérique de l'image, un moyen programmable de commande de la machine à graver et la machine à graver proprement dite.

L'image brute en provenance de la prise de vue est numérisée puis visualisée. Ces données sont ensuite traitées au nieau des contrastes, des échelles, des dimensions et des retouches. A chacun de ces traitements correspond une visualisation simultanée du résultat obtenu sous une forme équivalente à l'image à graver.

Lorsque ces traitements sont effectués, les données relatives à l'image définitivement retenue sont mémorisées sur un support informatique pour piloter en conséquence la machine à graver.

Ces caractéristiques et d'autres encore ressortiront de la suite de la description.

Pour fixer l'objet de l'invention, sans toutefois le limiter, dans les dessins annexés :

La figure 1 est un synoptique du dispositif selon l'invention.

La figure 2 montre les différentes étapes du procédé sous forme d'un organigramme.

La figure 3 est une vue en coupe et à grande échelle, d'une plaque support dont l'image gravée est obtenue dans la masse, selon une première forme de réalisation.

La figure 4 est une vue en plan et en coupe, selon la ligne 4-4 de la figure 3.

La figure 5 est une vue en coupe et à grande échelle d'une plaque support dont l'image gravée est obtenue dans la masse, selon une autre forme de réalisation.

La figure 6 est une vue en plan et en coupe, selon la ligne 6-6 de la figure 5.

La figure 7 est une vue en coupe et à grande échelle d'une plaque support dont l'image gravée est obtenue par superposition.

La figure 8 est une vue en plan et en coupe selon la ligne 8-8 de la figure 7.

Afin de rendre plus concret l'objet de l'invention, on le décrit maintenant d'une manière non limitative, en se référant aux exemples de réalisation illustrés aux figures des dessins.

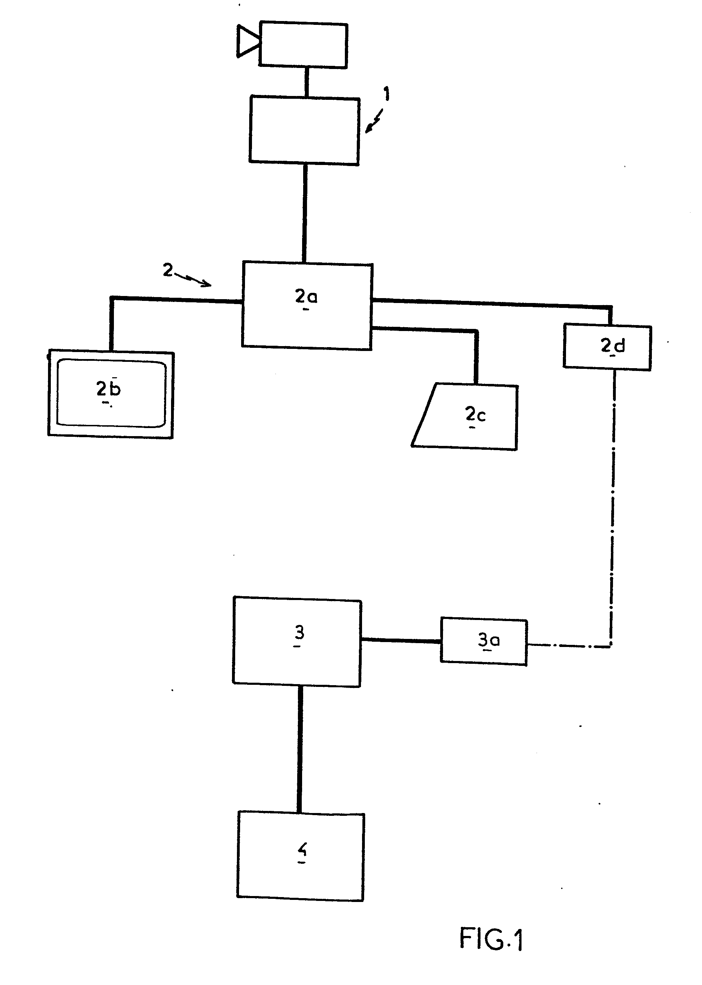

On voit à la figure 1, les éléments constitutifs essentiels du dispositif qui, en combinaison, permettent d'atteindre le résultat spécifiquement recherché, à savoir, la gravure digitale ou numérisée.

Dans ce but, l'objet dont l'image doit être gravée, est visualisé par un moyen de prises de vues (1) mettant en oeuvre un système électronique du type vidéo ou autre, et d'une résolution convenablement déterminée et appropriée. Le mode de fonctionnement est statique ou à balayage.

Ce moyen de prises de vues (1) est asservi à un moyen informatique de traitement de l'image, désigné dans son ensemble par (2). Il comprend un numériseur (2a) à microprocesseur qui est connectable notamment à un système de visualisation (2b), à un pupitre de commande (2c) et à un système de stockage des données (2d).

L'ensemble du moyen informatique de traitement (2), notamment le numériseur (2a), assure la conversion de la grille ou matrice de l'image acquise par le moyen de prises de vues (1), en une grille ou matrice de l'image à reproduire par gravure. Pour tout élément de la grille de l'image à reproduire en rapport noir sur blanc, ou autre, et dans le cas d'un image bicolore, le numériseur (2a) évalue la valeur moyenne de "gris" des éléments de la grille image acquise correspondante.

Ce rapport "noir sur blanc" est transformé en diamètre de taches noir sur blanc, ou inversement, selon une loi physique ajustable.

De même, ce moyen informatique (2) permet d'effectuer à volonté, toutes corrections nécessaires de forme et de contraste ainsi que toutes modifications de format et d'échelle.

Le système de visualisation (2b) permet d'obtenir sur écran, l'image constituée de taches sombres sur fond clair, ou inversement (taches claires sur fond sombre), pour tout élément de la grille identique à celle à reproduire.

On peut utiliser par exemple, un système de visualisation du type cathodique, à plasma ou autre.

Le pupitre de commande (2c) est de tout type connu et approprié, tandis que le système de stockage des données (2d) constitue un support informatique quelconque tel que cassettes, diskettes, bandes...

Le support de stockage (2d) est asservi à un moyen informatique (3) de commande de la machine à graver (4). Ce moyen de commande (3) est avantageusement un automate programmable à microprocesseur, équipé d'un lecteur (3a) de support des données mémorisées en (2d) par le moyen de traitement de l'image, tout en étant conformé pour être connecté directement audit support de stockage (2d).

Cet automate est conformé et agencé pour commander directement la machine à graver (4), au niveau des entraînements de rotation et des déplacements verticaux.

D'une manière préférée, quoique non rigoureusement limitative, on emploie une machine à graver du type perçage, conformée pour permettre les mouvements horizontaux selon les axes des abscisses et des ordonnées, et les mouvements verticaux.

Concernant les mouvements horizontaux, ils doivent permettre le déplacement de la ou des têtes de perçage et/ou du support des plaques à graver. Quant aux mouvements verticaux, ils doivent permettre le perçage de trous cylindriques ou coniques.

Pour des trous cylindriques, de diamètre variable avec une profondeur fixe par exemple, on utilise une seule tête de perçage qui parcourt la surface à graver en plusieurs passes avec des outils de diamètres différents. Dans le cas de trous coniques avec des profondeurs variant avec le diamètre utile, il est possible de graver en une seule passe, avec plusieurs têtes de perçage.

Comme indiqué précédemment, l'image gravée est constituée de taches claires sur un fond sombre, ou inversement. La notion de dégradé est obtenue par la variation de densité des surfaces de taches en relation avec les lois physiques relatives aux contrastes et à la perception visuelle. Cette image peut être bicolore (noir et blanc, ou autre) sans pour cela exclure éventuellement une image multicolore.

Dans le cas d'une image bicolore, cette dernière peut être obtenue d'une manière connue, dans la masse (figures 3, 4, 5 et 6), ou par superposition (figures 7 et 8) de deux matériaux de couleur différente.

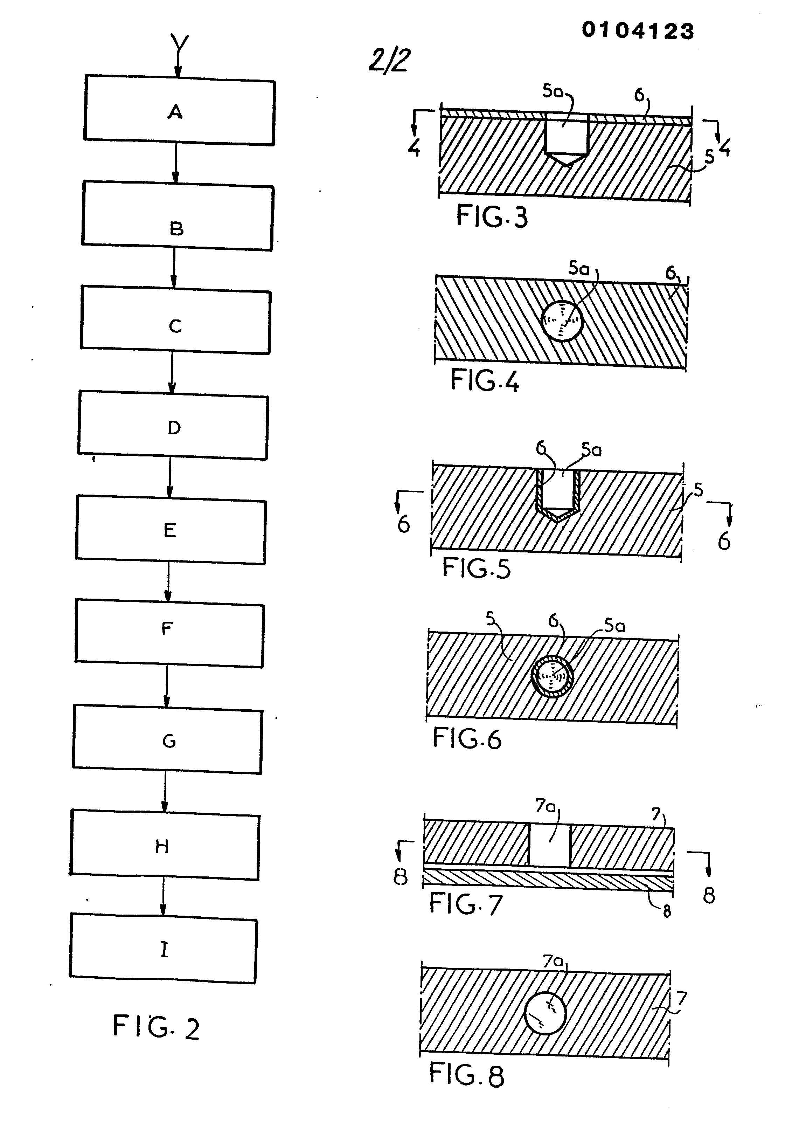

A l'exemple des figures 3 et 4, la plaque support (5) est percée de trous borgnes (5a), cylindriques ou coniques, comme mentionné précédemment. Cette plaque (5) subit extérieurement en surface, un dépôt de couleur (6) par unprocédé quelconque. Ou encore, toujours dans le cas d'une image obtenue dans la masse par perçage de trous borgnes (5a), cylindriques ou coniques, seul chaque trou (5a) subit un dépôt de couleur (6), par un procédé quelconque (figures 5 et 6).

Dans l'un quelconque des modes de réalisation précités, on peut obtenir indifféremment, une image positive ou une image négative.

Lorsque l'image est obtenue par superposition de deux matériaux (7 et 8) de couleur différente mais de même nature, le matériau supérieur (7) est percé ou poinçonné de part en part, en (7a), figures 7 et 8.

On observe que la gravure de l'image objet peut être réalisée sur des supports et matériaux de nature et de forme diverses.

Il convient maintenant de renvoyer à l'organigramme de la figure 2 pour analyser les différentes phases et étapes du procédé selon l'invention.

La première étape (A) correspond à la prise de vue de l'image de l'objet à graver. On procède ensuite à une numérisation de l'image, étape (B) puis à une visualisation de cette dernière étape (C).

Ces données sont ensuite traitées aux plans des contrastes, des échelles, des dimensions et des retouches, ce qui correspond à l'étape suivante (D). Il est à souligner que les différents traitements susvisés constituent indifféremment des opérations indépendantes ou simultanées.

A chacun de ces traitements, on fait correspondre une visualisation simultanée du résultat obtenu sous une forme équivalente à l'image gravée. C'est l'étape (E). On valide ensuite une étape (F) de mémorisation des données relatives à l'image retenue.

Vient ensuite une étape (G) d'asservissement du moyen programmable de commande de la machine à graver qui valide l'étape suivante (H) de pilotage de ladite machine. On arrive alors à l'étape FIN (I).

Les avantages ressortent bien de la description, en particulier on souligne :

- La qualité de l'image gravée obtenue, qui présente réellement un relief avec des effets de contraste ;

- la possibilité de traiter à volonté, les contrastes, les échelles, les dimensions et d'effectuer des retouches.

L'invention ne se limite aucunement à celui de ces modes d'application, non plus qu'à ceux des modes de réalisation de ces diverses parties ayant plus spécialement été indiqués ; elle en embrasse au contraire, toutes les variantes.

Revendications.

-1- Procédé de gravure digitale caractérisé en ce qu'il comprend les étapes suivantes :
- une étape (A) de prise de vue de l'image à graver,
- une étape (B) de numérisation de l'image,
- une étape (C) de visualisation de l'image,
- une étape (D) de traitements des données aux plans des contrastes, des échelles, des dimensions, des retouches,
- une étape (E) de visualisation simultanée de chacun des résultats obtenus après les traitements précités,
- une étape (F) de mémorisation sur support informatique après traitement des données relatives à l'image retenue,
- une étape (G) d'asservissement du moyen programmable de commande de la machine à graver,
- une étape (H) de pilotage de la machine à graver,
- une étape (I) FIN.

-2- Dispositif pour la mise en oeuvre du procédé selon la revendication 1, caractérisé en ce qu'il comprend essentiellement en combinaison, un moyen de prises de vues, un moyen informatique de traitement numérique de l'image, un moyen informatique programmable de commande de la machine à graver, une machine à graver.

-3- Dispositif selon la revendication 2, caractérisé en ce que le moyen de prises de vues comprend un système électronique du type vidéo ou autre, de mode statique ou à balayage.

-4- Dispositif selon la revendication 2, caractérisé en ce que le moyen informatique de traitement est un numériseur à microprocesseur qui est connectable notamment à un système de visualisation, à un pupitre de commande et à un système de stockage des données.

-5- Dispositif selon la revendication 2, caractérisé en ce que le système de visualisation est du type cathodique, à plasma et autre, en étant conformé pour obtenir une image constituée de taches sombres sur fond clair (ou inversement), pour tout élément d'une grille identique à reproduire.

-6- Dispositif selon la revendication 2, caractérisé en ce que le moyen informatique de commande de la machine est un automate programmable à microprocesseur, équipé d'un lecteur de support des données mémorisées par le moyen de traitement d'images et conformé pour être connecté directement à ce dernier.

-7- Dispositif selon la revendication 2, caractérisé en ce que la machine à graver est du type perçage, en étant conformée pour permettre les mouvements horizontaux selon les axes X et Y et les mouvements verticaux.

-8- Image gravée, directement obtenue par la mise en oeuvre du procédé selon la revendication 1, caractérisée en ce que la dite image, bicolore notamment, est réalisée par perçage borgne, cylindrique ou conique, d'une plaque en métal notamment.

-9- Image selon la revendication 8, caractérisée en ce que la surface de la plaque subit le dépôt d'une couleur par un procédé quelconque.

-10- Image selon la revendication 8, caractérisée en ce que chaque trou subit un dépôt de couleur par un procédé quelconque.

-11- Image gravée, directement obtenue par la mise en oeuvre du procédé selon la revendication 1, caractérisée en ce que la dite image, bicolore notamment, est réalisée par superposition de deux matériaux de couleur différente, le matériau supérieur étant percé ou poinçonné.

0104123

FIG·1

0104123

A

B

C

D

E

F

G

H

I

FIG. 2

FIG. 3

FIG. 4

FIG. 5

FIG. 6

FIG. 7

FIG. 8

**0104123**

Office européen
des brevets

**RAPPORT DE RECHERCHE EUROPEENNE**

Numéro de la demande

EP 83 42 0141

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | WO-A-8 002 607 (HELL) <br> * page 1, ligne 1 - page 2, ligne 28; page 7, lignes 29-33; page 9, ligne 20-34; page 51, ligne 10 - page 53, ligne 11 * | 1-11 | B 41 C 1/04 <br> B 44 C 1/22 |
| | --- | | |
| Y | FR-A-2 164 394 (HELL) <br> * page 7, ligne 8 - page 8, ligne 31; page 12, lignes 19-25; page 14, lignes 1-38; page 19, ligne 13 - page 22, ligne 37 * | 6-8,10 | |
| | --- | | |
| Y | DE-A-2 231 465 (GRUNER & JAHR GmbH) <br> * page 5, ligne 11 - page 6, ligne 13 * | 8-10 | |
| | --- | | **DOMAINES TECHNIQUES RECHERCHES (Int. Cl. ³)** |
| Y | US-A-2 638 500 (ERNST) <br> * colonne 6, ligne 37 - colonne 7, ligne 16 * | 8-10 | |
| | --- | | B 41 C 1/00 <br> B 44 C 1/00 |
| Y | FR-A- 875 853 (BELIN) <br> * page 1, lignes 17-36 * | 9,10 | H 04 N 1/00 |
| | --- | | |
| Y | DE-C- 54 464 (HIMMEL) <br> * en entier * | 11 | |
| | ----- | | |

Le présent rapport de recherche a été établi pour toutes les revendications

| Lieu de la recherche <br> LA HAYE | Date d'achèvement de la recherche <br> 30-11-1983 | Examinateur <br> DE ROECK A.F.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D . cité dans la demande
L : cité pour d'autres raisons

& : membre de la même famille, document correspondant

OEB Form 1503 03 82